# EUROPEAN PATENT APPLICATION

(11) **EP 1 519 538 A2**
(43) Date of publication of application: **30.03.2005**
(21) Application number: 04255910.4
(22) Date of filing: 28.09.2004
(51) Int. Cl.: H04L 29/06

(54) **Mobility device platform**

(30) Priority: 29.09.2003 US 507197 P; 29.09.2003 US 506918 P; 29.09.2003 US 506919 P; 29.09.2003 US 506925 P; 22.01.2004 US 543735 P; 22.01.2004 US 538763 P; 22.01.2004 US 538915 P; 22.01.2004 US 538767 P; 30.04.2004 US 837426
(71) Applicant: Realm Systems, Inc., Salt Lake City, Utah 84124 (US)
(72) Inventor: Bookman, Peter, Draper Utah 84020 (US); White, Rick Charles, Salt Lake City Utah 84124 (US)
(74) Representative: Murnane, Graham John

(57) **Abstract**

A mobility device platform allowing for secure mobile computing is provided. In an illustrative implementation, an exemplary mobility device platform comprises a mobility device operable to communicate with at least one computing environment through a communications interface and wherein the mobility device is operable to process and store secure web services, a communications network operable to communicate data and computing applications using web services, and a mobility device management server operable to generate, process, store, communicate and encrypt web services to the mobility device. Further, the mobility device management server is operable to perform one or more mobility device management functions to provide encryption keys to cooperating mobility devices and to authenticate and verify cooperating mobility devices requesting web services from the mobility device management server. The mobility device management server and mobility device may further operate to perform authentication and verification using user identification and password information.

## Description

### CLAIM OF PRIORITY AND CROSS REFERENCE

This application claims the benefit of the following U.S. Provisional Patent Applications: 60/507,197, entitled, "GO-KEY SYSTEM," filed on September 29, 2003; 60/506,918, entitled, "GO-KEY ONLINE MUSIC SUBSCRIPTION AND DISTRIBUTION APPLICATION AND SERVICE," filed on September 29, 2003; 60/506,919, entitled, "GO-KEY E-MAIL APPLICATION AND SERVICE," filed on September 29, 2003; 60/506,925, entitled, "GO-KEY MOBILE DESKTOP ENVIRONMENT," filed on September 29, 2003; 60/543,735, entitled, "MDMS," filed on January 22, 2004; 60/538,763, entitled, "OMNI FILE SYSTEM (OFS)," filed on January 22, 2004; 60/538,915, entitled, "UDDI DIRECTORY," filed on January 22, 2004; and 60/538,767, entitled, "UDDI REPOSITORY," filed on January 22, 2004, which are hereby incorporated by reference in their entirety. Additionally, this application is related to, cross-references, and herein, incorporates by reference in its entirety the following co-pending applications: 10/836,934, entitled, "MOBILITY DEVICE SERVER," (Attorney Docket: 45597/196321), filed on April 30, 2004, and 10/836,933, entitled, "MOBILITY DEVICE," (Attorney Docket: 45597/196314), filed on April 30, 2004.

### FIELD OF INVENTION

The herein described systems and methods relate to a mobile computing technologies, and more importantly, to a mobility device platform that allows for secure, remote mobile computing utilizing a mobility device, a communications network, and a mobility device server.

### BACKGROUND

Enterprises and individuals, alike, increasingly require mobility as a feature of their computing environments). For enterprises, mobility allows the deployment of personnel across disparate geographic locations allowing the enterprises to better serve their clients. For example, a large pharmaceutical corporation may wish to deploy their sales personnel in the "field" close to prospective customers (e.g. doctors). In such context, "field" personnel may wish to have access to sensitive sales and marketing information and computing application over a secure connection. With current solutions, these personnel are often left with the cumbersome task of "synchronizing" their data at the end of the day with their corporate network through some secure computer network connection (e.g. virtual private network). Comparatively, individuals seek mobility in their computing environments to allow for the ability to be close to their data and computing applications, and more importantly, to continually stay "connected" in the age of Internet communications.

Responsive to the need for mobile computing, computing environment manufacturers have developed mobile computing technologies (e.g. stand alone, networked, and/or embedded) that allow people to enjoy their computing environments on the road. Such mobile devices aim at allowing the user to "carry" their files and applications with them at all times. Although providing mobility, these devices tend to be marginally effective as they vary in form factor, processing capability, and portability. With such limitations, users are often relegated to lugging around large portable computers to ensure that they have all of their needed files and computing applications. Such practice is premised on the inherent deign of computing systems - namely employing "device-centric" computing.

With "device-centric" computing, users, although may have access to files remotely and securely via remote communications applications (e.g. virtual private networks), still are relegated to carry around large cumbersome computing instrumentalities to retrieve their data and computing applications. More importantly, with device centric computing, users are generally provisioned one device for their enterprise computing needs (e.g. company personal computer, or laptop) and generally have one or more computing environments in their home for personal use. In maintaining multiple computing environments, computer users are charged with the task of synchronizing their custom preferences and settings among their many different computing environments. Such task is arduous at best and often leaves computer users frustrated in not having access to desired data and/or computing applications between their many different computing environments.

For example, a computer user may wish to have their financial planning and management data from his/her financial planning and management computing application (e.g. Quicken, Microsoft Money) with them at all times to address any payments that might spring up (e.g. a lapsed bill). With current solutions, the computing user is relegated to install the financial planning and management computing application and data on each of his/her computing environments (including his/her corporate computer - which may be in violation of corporate computing policies and procedures) so that he/she can have access to this desired data. Comparatively, enterprises may wish to effectively and immediately terminate all access to sensitive corporate data from employees who are to be terminated. Under current practices that are based on device-centric computing, the employee is asked to turn in their computing environments (e.g. laptops, personal computers, mobile phone, or personal digital assistants). Additionally, the soon-to-be terminated employee may be restricted in their use of corporate data by terminating their enterprise user directory information. However, there is an inherent latency in collecting such devices and terminating access. Such latency could result in the employee copying files from the enterprise computing environment for their subsequent use. As such, under existing practices sensitive enterprise data may be compromised.

From the foregoing it is appreciated that there exists a need to overcome the shortcomings of existing practices.

### SUMMARY

A mobility device platform allowing for secure mobile computing is provided. In an illustrative implementation, an exemplary mobility device platform comprises a mobility device operable to communicate with at least one computing environment through a communications interface and wherein the mobility device is operable to process and store secure web services, a communications network operable to communicate data and computing applications using web services, and a mobility device management server operable to generate, process, store, communicate and encrypt web services to the mobility device. Further, the mobility device management server is operable to perform one or more mobility device management functions to provide encryption keys to cooperating mobility devices and to authenticate and verify cooperating mobility devices requesting web services from the mobility device management server. The mobility device management server and mobility device may further operate to perform authentication and verification using user identification and password information.

In operation, the exemplary mobility device is configured for use on a cooperating computing environment. Further the mobility device establishes communications with cooperating one or more mobility device management servers and attempts to be authenticated and verified by the cooperating one or more mobility device management servers using selected authentication and verification information. Upon authentication and verification, the cooperating one or more mobility device management servers process requests for data and computing applications from the cooperating exemplary mobility device using web services. The web services are encrypted by the cooperating one more mobility device management servers using the exemplary selected authentication and verification information (e.g. keys) to allow secure communications of requested data and computing applications from the cooperating one more mobility device management servers and the exemplary mobility device.

Other features of the herein described systems and methods are further described below.

### BRIEF DESCRIPTION OF THE DRAWINGS

The mobility device platform and methods of use are further described with reference to the accompanying drawings in which:

Figure 1 is a block diagram of an exemplary computing environment in accordance with an implementation of the herein described systems and methods;

Figure 2 is a block diagram of an exemplary computing network environment in accordance with the herein described system and methods;

Figure 3 is a block diagram showing the interaction between exemplary computing components in accordance with the herein described systems and methods;

Figure 4 is a block diagram of an illustrative implementation of a mobility device platform in accordance with the herein described systems and methods;

Figure 5 is a block diagram of another illustrative implementation of a mobility device platform in accordance with the herein described systems and methods;

Figure 6 is a flow diagram of processing performed to configure an illustrative implementation of a mobility device platform in accordance with the herein described systems and methods;

Figure 7 is a flow diagram of processing performed by an illustrative implementation of a mobility device platform in accordance with the herein described systems and methods;

Figure 8 is a flow diagram of processing performed by another illustrative implementation of a mobility device platform in accordance with the herein described systems and methods; and

Figure 9 is a flow diagram of processing performed by another illustrative implementation of a mobility device platform in accordance with the herein described systems and methods.

### DETAILED DESCRIPTION

### Overview:

The herein described systems and methods offer a "user-centric" approach to computing and mobile computing. Current computing solutions, enterprise or individual, are generally designed using a "device-centric" model. The device-centric model aims at managing and tracking users based on device assignments and designations. For example, in the context of enterprise computing, the enterprise computing environment may comprise a number of server computing environments and numerous client computing environments. Generally, each user in the enterprise is provisioned client computing environment (e.g. personal computer or laptop computer) that is generally networked to the server computing environment through the enterprise communications interface or, if the user is remote to the enterprise communications network, through a virtual private network (VPN). Additionally, in conventional enterprise computing environments, the users are provided user identification information and password information through a directory services structure that associates user rights and privileges to certain enterprise data and computing applications.

With such enterprise computing environments, the user is often relegated to be only allowed to customize his/her provisioned computing environment with their preferences and settings such that if the user roams across the network and logs onto to a computing environment other than their own, they do not have access to their custom preferences and settings. This problem is also seen as enterprise users wishing to maintain synchronization in preferences and settings (e.g. browser bookmarks, look and feel of desktop, color scheme, layout of applications, and directory structure for files) between their enterprise computing environment and their personal computing environment (e.g. home computer) are often relegated to perform manual synchronization.

Moreover, with existing enterprise computing environments administration of the numerous client computing environments becomes a daunting task. Currently, enterprises hire information technology departments numbering in the tens, in not hundreds, to support the many users and their computing environments. Beyond mere physical administration, integrity and security of corporate data is put into play with the device-centric computing model. In such context, enterprise computing users are often left to their own volition in copying and comprising sensitive enterprise data. As the task of preventing users from unauthorized copying of enterprise files and data is daunting at best, most enterprises turn a blind eye. Such limitation of existing practices can be very costly to enterprises and individuals alike.

The herein described systems and methods aim to ameliorate the shortcomings of existing practices by providing a mobility device platform (MDP) designed using a "user-centric" model. In an illustrative implementation, the mobility device platform comprises at least one mobility device (MD) operable to communicate with one or more cooperating computing environments (e.g. personal computer, personal digital assistant, mobile phone, networked computer, and other computing environments) through a communications interface (e.g. universal serial bus (USB), IEEE 1394 communications interface (Firewire), 802.XX communications interface, blutetooth communications interface, personal computer interface, small computer serial interface, and wireless application protocol (WAP) communications interface). Additionally, the mobility device platform comprises one or more mobility device management servers (MDMS) that operate to authenticate and verify and provide user management for cooperating mobility devices and their users.

In operation, the mobility device may cooperate with one or more computing environments invoking one or more work spaces to process web services. The web services may be executed from data and computing applications local to the MD, or the MD may cooperate with one or more MDMS to obtain the desired web service. The MDMS may operate to authenticate requesting MDs to ensure that they have the rights and privileges to the requested web services. Additionally, the MDMS may cooperate with third party web service providers to obtain requested web services. In such context, the MDMS may act to translate the web service from a non-MD native web service format to a native MD web service. When communicating web services from the MDMS to cooperating MDs, the MDMS and MD engage in 1028 bit and/or 2056 bit encryption (e.g. PKI encryption) using user and device authentication and verification information. The web services provided by the MDMS to the MD may include but are not limited to computing applications and desired data. Additionally, the MD may operate to store the participating user's customized settings and preferences local to the MD so they are available to the user at all times.

As such with the mobility device platform users may traverse any number of cooperating computing environments confident that they will have access to their customized settings and preferences and, more importantly, secure access to their computing applications and files (e.g. as provided as web services).

### Web Services:

Services provided over the a communications network such as the internet Internet, commonly referred to as web services or application services, are evolving. Likewise, technologies that facilitate such services are also evolving. A web service can be defined as any information source running business logic processes conveniently packaged for use by an application or end-user. Web services are increasingly becoming the means through which one can provide functionality over a network. Web services typically include some combination of programming and data that are made available from an application server for end users and other network-connected application programs. Web services range from such services as storage management and customer relationship management down to much more limited services such as the furnishing of a stock quote and the checking of bids for an auction item.

Activities focusing on defining and standardizing the use of web services include the development of Web Services Description Language (WSDL). WSDL is an Extensible Markup Language (XML) format for describing web services as a set of endpoints operating on messages containing either document-oriented or procedure-oriented information. The operations and messages are described abstractly, and then bound to a concrete network protocol and message format to define an endpoint. Related concrete endpoints are combined into abstract endpoints (services).

Currently, the advocated web service usage model is generally as follows.

(1) Services are implemented and deployed on one site, often referred to as the server side.

(2) Services are described using WSDL and are published via means such as UDDI (Universal Description, Discovery, and Integration), which is an XML-based registry for businesses worldwide to list themselves on the Internet by the web services they offer.

(3) Client applications use web services at another site, often referred to as the client side, by first interpreting one or more WSDL documents. Once interpreted, the clients can understand the characteristics of the associated service(s). For example, service characteristics may include service API specifications such as (a) input data type, (b) service input data format, (c) service access mechanism or style (e.g., RPC versus messaging), and (d) related encoding format.

(4) Client applications prepare their data in manners in which various particular web services understand.

(5) Client applications invoke a particular service according to the manner specified for the service, such as in an associated WSDL document.

Many differences exist among web services with respect to the format of input data and the manner in which they are invoked. For example, suppose one application service provider provides a service, getCityWeather, that requires a single input parameter, such as a conventional city name (e.g., SLC for Salt Lake City). A client application that intends to invoke such a service needs to be written so that data within or output by the application is able to be analyzed to extract the city information. At runtime, the prepared symbol is passed to the getCityWeather service site using appropriate APIs.

However, suppose another application service provider provides a similar service that requires two input parameters, such as the city name and the zip code. Hence, if a client application intends to invoke this second service, it needs to analyze and extract its data appropriately in regards to the required service input parameters. Therefore, if a single application was intended to invoke both services, the application would have to be hard-coded with service-specific API information and procedures. Furthermore, if the application was intended to invoke numerous services, the application would have to be hard-coded with service-specific API information and procedures related to each and every service that it intended to invoke.

As explained above, various web services may provide similar functionality but differ in many ways. The herein described system and methods aim to ameliorate such disparity by offering a mobility device platform having a mobile device management server which includes, among other things, a web services translation module operative to accept data from web services web services providers and present them in a web service model native to cooperating mobility devices.

### Simple Object Access Protocol (SOAP) Overview:

The Simple Object Access Protocol (SOAP) is a lightweight, XML-based protocol for exchanging information in a decentralized, distributed environment. SOAP supports different styles of information exchange, including:

Remote Procedure Call style (RPC), which allows for request-response processing, where an endpoint receives a procedure oriented message and replies with a correlated response message.

Message-oriented information exchange, which supports organizations and applications that need to exchange business or other types of documents where a message is sent but the sender may not expect or wait for an immediate response.

Generally, a SOAP message consists of a SOAP envelope that encloses two data structures, the SOAP header and the SOAP body, and information about the name spaces used to define them. The header is optional; when present, it conveys information about the request defined in the SOAP body. For example, it might contain transactional, security, contextual, or user profile information. The body contains a Web Service request or reply to a request in XML format. The high-level structure of a SOAP message is shown in the following figure.

SOAP messages, when used to carry Web Service requests and responses, can conform to the web services definition language (WSDL) definition of available Web Services. WSDL can define the SOAP message used to access the Web Services, the protocols over which such SOAP messages can be exchanged, and the Internet locations where these Web Services can be accessed. The WSDL descriptors can reside in UDDI or other directory services, and they can also be provided via configuration or other means such as in the body of SOAP request replies.

There is a SOAP specification (e.g. w3 SOAP specification - found at www.w3.org) that provides a standard way to encode requests and responses. It describes the structure and data types of message payloads using XML Schema. The way that SOAP may be used for the message and response of a Web Service is:

The SOAP client uses an XML document that conforms to the SOAP specification and which contains a request for the service.

The SOAP client sends the document to a SOAP server, and the SOAP servlet running on the server handles the document using, for example, HTTP or HTTPS.

The Web service receives the SOAP message, and dispatches the message as a service invocation to the application providing the requested service.

A response from the service is returned to the SOAP server, again using the SOAP protocol, and this message is returned to the originating SOAP client.

It is appreciated that although SOAP is described herein as a communication protocol for the herein described systems and methods that such description is merely illustrative as the herein described systems and methods may employ various communication protocols and messaging standards.

### Illustrative Computing Environment

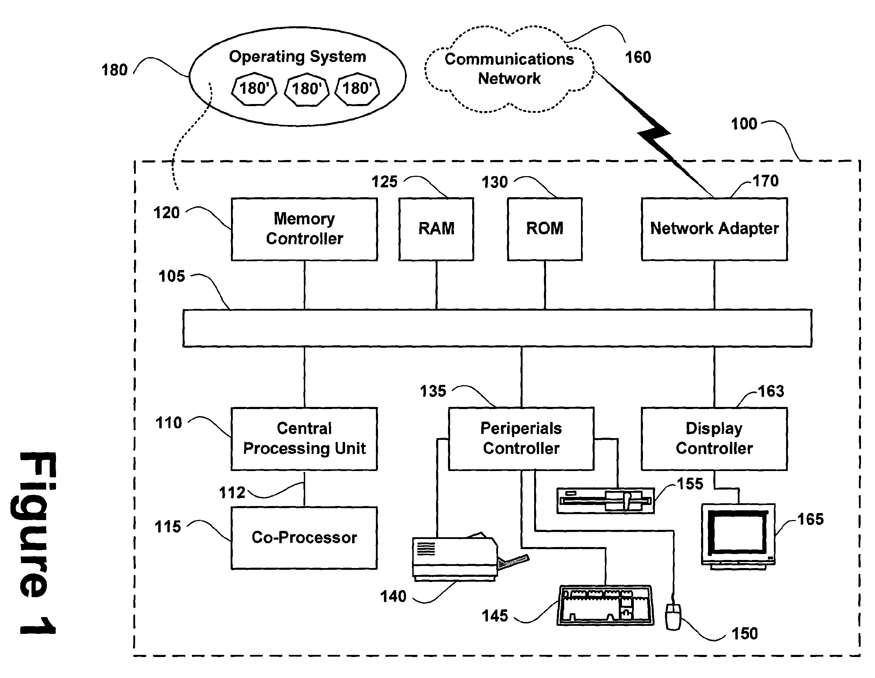

Figure 1 depicts an exemplary computing system 100 in accordance with herein described system and methods. Computing system 100 is capable of executing a variety of operating systems 180 and computing applications 180' (e.g. web browser and mobile desktop environment) operable on operating system 180. Exemplary computing system 100 is controlled primarily by computer readable instructions, which may be in the form of software, where and how such software is stored or accessed. Such software may be executed within central processing unit (CPU) 110 to cause data processing system 100 to do work. In many known computer servers, workstations and personal computers central processing unit 110 is implemented by micro-electronic chips CPUs called microprocessors. Coprocessor 115 is an optional processor, distinct from main CPU 110, that performs additional functions or assists CPU 110. CPU 110 may be connected to co-processor 115 through interconnect 112. One common type of coprocessor is the floating-point coprocessor, also called a numeric or math coprocessor, which is designed to perform numeric calculations faster and better than general-purpose CPU 110.

It is appreciated that although an illustrative computing environment is shown to comprise a single CPU 110 that such description is merely illustrative as computing environment 100 may comprise a number of CPUs 110. Additionally computing environment 100 may exploit the resources of remote CPUs (not shown) through communications network 160 or some other data communications means (not shown).

In operation, CPU 110 fetches, decodes, and executes instructions, and transfers information to and from other resources via the computer's main data-transfer path, system bus 105. Such a system bus connects the components in computing system 100 and defines the medium for data exchange. System bus 105 typically includes data lines for sending data, address lines for sending addresses, and control lines for sending interrupts and for operating the system bus. An example of such a system bus is the PCI (Peripheral Component Interconnect) bus. Some of today's advanced busses provide a function called bus arbitration that regulates access to the bus by extension cards, controllers, and CPU 110. Devices that attach to these busses and arbitrate to take over the bus are called bus masters. Bus master support also allows multiprocessor configurations of the busses to be created by the addition of bus master adapters containing a processor and its support chips.

Memory devices coupled to system bus 105 include random access memory (RAM) 125 and read only memory (ROM) 130. Such memories include circuitry that allows information to be stored and retrieved. ROMs 130 generally contain stored data that cannot be modified. Data stored in RAM 125 can be read or changed by CPU 110 or other hardware devices. Access to RAM 125 and/or ROM 130 may be controlled by memory controller 120. Memory controller 120 may provide an address translation function that translates virtual addresses into physical addresses as instructions are executed. Memory controller 120 may also provide a memory protection function that isolates processes within the system and isolates system processes from user processes. Thus, a program running in user mode can normally access only memory mapped by its own process virtual address space; it cannot access memory within another process's virtual address space unless memory sharing between the processes has been set up.

In addition, computing system 100 may contain peripherals controller 135 responsible for communicating instructions from CPU 110 to peripherals, such as, printer 140, keyboard 145, mouse 150, and data storage drive 155.

Display 165, which is controlled by display controller 163, is used to display visual output generated by computing system 100. Such visual output may include text, graphics, animated graphics, and video. Display 165 may be implemented with a CRT-based video display, an LCD-based flat-panel display, gas plasma-based flat-panel display, a touch-panel, or other display forms. Display controller 163 includes electronic components required to generate a video signal that is sent to display 165.

Further, computing system 100 may contain network adaptor 170 which may be used to connect computing system 100 to an external communication network 160. Communications network 160 may provide computer users with means of communicating and transferring software and information electronically. Additionally, communications network 160 may provide distributed processing, which involves several computers and the sharing of workloads or cooperative efforts in performing a task. It will be appreciated that the network connections shown are exemplary and other means of establishing a communications link between the computers may be used.

It is appreciated that exemplary computer system 100 is merely illustrative of a computing environment in which the herein described systems and methods may operate and does not limit the implementation of the herein described systems and methods in computing environments having differing components and configurations as the inventive concepts described herein may be implemented in various computing environments having various components and configurations.

### Illustrative Computer Network Environment:

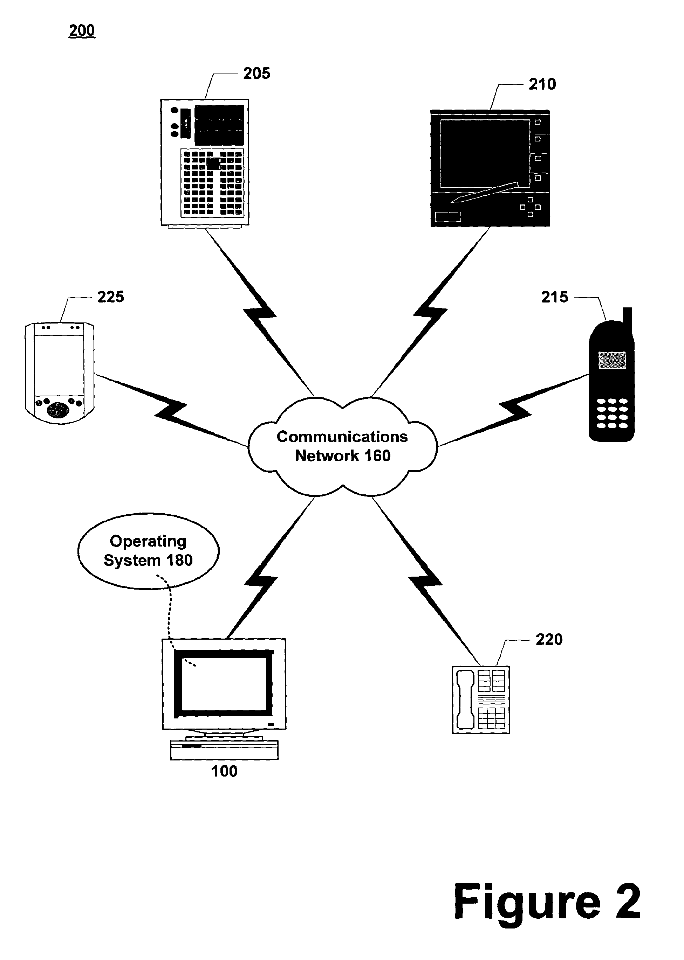

Computing system 100, described above, can be deployed as part of a computer network. In general, the above description for computing environments applies to both server computers and client computers deployed in a network environment. Figure 2 illustrates an exemplary illustrative networked computing environment 200, with a server in communication with client computers via a communications network, in which the herein described systems and methods may be employed. As shown in Figure 2 server 205 may be interconnected via a communications network 160 (which may be either of, or a combination of a fixed-wire or wireless LAN, WAN, intranet, extranet, peer-to-peer network, the Internet, or other communications network) with a number of client computing environments such as tablet personal computer 210, mobile telephone 215, telephone 220, personal computer 100, and personal digital assistance 225. Additionally, the herein described systems and methods may cooperate with automotive computing environments (not shown), consumer electronic computing environments (not shown), and building automated control computing environments (not shown) via communications network 160. In a network environment in which the communications network 160 is the Internet, for example, server 205 can be dedicated computing environment servers operable to process and communicate web services to and from client computing environments 100, 210, 215, 220, and 225 via any of a number of known protocols, such as, hypertext transfer protocol (HTTP), file transfer protocol (FTP), simple object access protocol (SOAP), or wireless application protocol (WAP). Each client computing environment 100, 210, 215, 220, and 225 can be equipped with browser operating system 180 operable to support one or more computing applications such as a web browser (not shown), or a mobile desktop environment (not shown) to gain access to server computing environment 205.

In operation, a user (not shown) may interact with a computing application running on a client computing environments to obtain desired data and/or computing applications. The data and/or computing applications may be stored on server computing environment 205 and communicated to cooperating users through client computing environments 100, 210, 215, 220, and 225, over exemplary communications network 160. A participating user may request access to specific data and applications housed in whole or in part on server computing environment 205 using web services transactions. These web services transactions may be communicated between client computing environments 100, 210, 215, 220, and 220 and server computing environments for processing and storage. Server computing environment 205 may host computing applications, processes and applets for the generation, authentication, encryption, and communication of web services and may cooperate with other server computing environments (not shown), third party service providers (not shown), network attached storage (NAS) and storage area networks (SAN) to realize such web services transactions.

Thus, the systems and methods described herein can be utilized in a computer network environment having client computing environments for accessing and interacting with the network and a server computing environment for interacting with client computing environments. However, the systems and methods providing the mobility device platform can be implemented with a variety of network-based architectures, and thus should not be limited to the example shown. The herein described systems and methods will now be described in more detail with reference to a presently illustrative implementation.

### Cooperation of Mobility Device Platform Components:

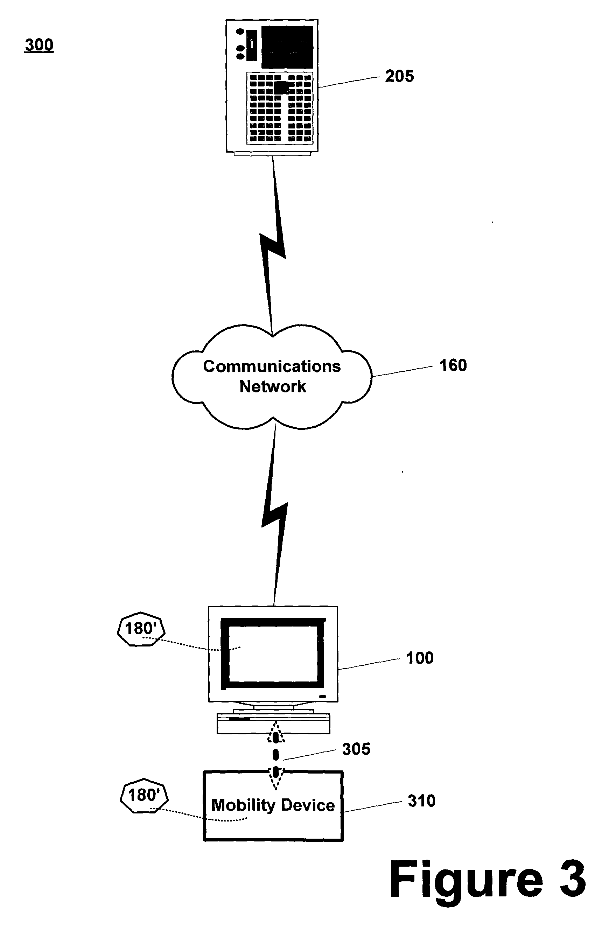

Figure 3 shows an exemplary interaction between the components of an exemplary mobility device platform. Generally as is shown in Figure 3, exemplary mobility device platform 300, in simple terms, may comprise mobility device 310 cooperating with client computing environment 100 using communications interface 305 operating on a selected communications protocol (not shown). Additionally, exemplary mobility device platform 300 may further comprise communications network 160 (of Figure 1) and server computing environment 205.

In operation mobility device may cooperate with client computing environment 100 through communications interface 305 to execute one or more computing applications 180' originating from mobility device 310 and displayable for user interaction on client computing environment 100. Computing applications 180' may include but are not limited to, a browser application offering the look and feel of conventional operating systems, word processing applications, spreadsheets, database applications, web services applications, and user management/preference applications. Additionally, mobility device 310 may cooperate with server computing environment 205 via communications network 160 using client computing environment 100 to obtain data and/or computing applications in the form of web services.

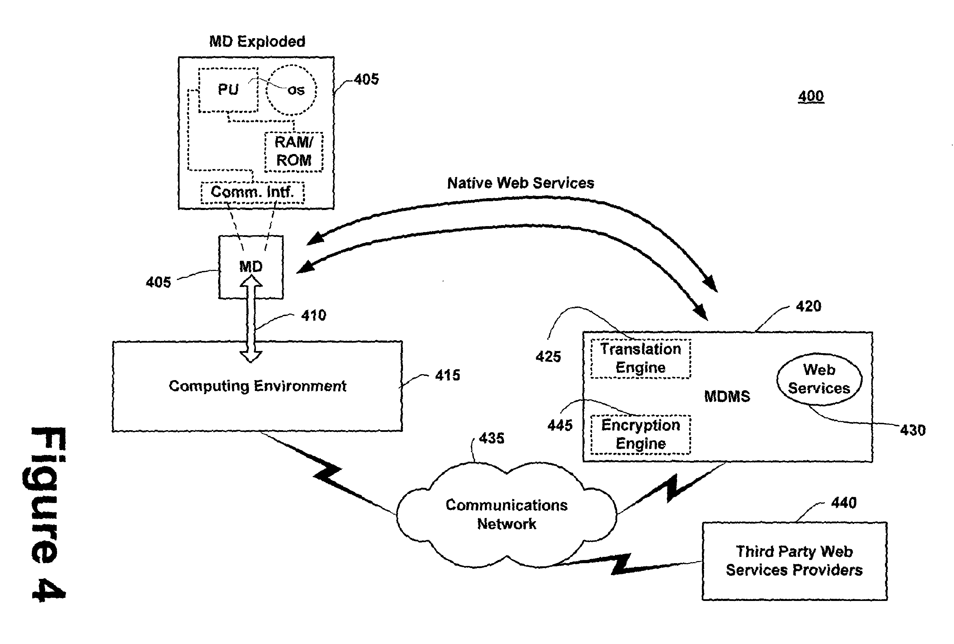

Figure 4 shows the interaction of components for exemplary mobility device platform 400. As is shown in Figure 4, exemplary mobility device platform 400 comprises mobility device (MD) 405, computing environment 410, communications network 435, mobility device management server (MDMS) 420 and third party web service providers 440. Additionally, as is further shown in the MD exploded view, MD 405 further comprises processing unit (PU), operating system (OS), storage memory (RAM/ROM), and an MD communications interface. Also, MDMS 420 further comprises translation engine 425, web services 430, and encryption engine 445.

In operation, MD 405 communicates with computing environment 415 using one or more of MD components PU, OS, RAM/ROM and MD communications interface through MD/computing environment communications interface 410. When communicating with computing environment 415, MD 405 may launch one or more computing applications (not shown) that may include but are not limited to, a mobile desktop environment, user customization and authentication manager, and web services applications as part of configuration. Once configured, MD 405 may further cooperate with computing environment 415 to process one or more web services (e.g. web service data and/or computing applications). In such context, MD 405 may also request web services data and/or computing applications from cooperating MDMS 420 using communications network 435 to process such web services. In such instance, MDMS 420 may operate to authenticate MD 405 to ensure that the participating user (not shown) and mobility device 405 have the correct privileges to the requested data and/or computing applications. The authentication processing can employ one or more security peripherals as part of user authentication including, but not limited to, biometric security peripherals (not shown), retinal scan security peripherals (not shown), and voice recognition security peripherals (not shown).

If properly authenticated, MDMS 420 may further operate to locate the requested data and/or computing applications locally at MDMS 420 and provide such requested data and/or computing applications (e.g. web services) to the authenticate MD 405 over communications network 435, or operate to cooperate with third party services providers 440 to obtain the requested web services for communication to the authenticated MD 405. When cooperating with third party web services providers 440, MDMS 420 may operate to translate the web services 430 originating from third party web services providers 440 to an MD native format using translation engine 425. Additionally, MDMS 420 may operate to encrypt requested web services using encryption engine 445 when satisfying requests for web services from authenticated MD 405.

Additionally, MDMS 420 may further operate to cooperate with a file system (not shown) using a selected encryption protocol (e.g. PKI encryption) to obtain the requested data for communication to MD 405. The cooperating file system may include but is not limited to file allocation table (FAT) file systems and new technology files system (NTFS).

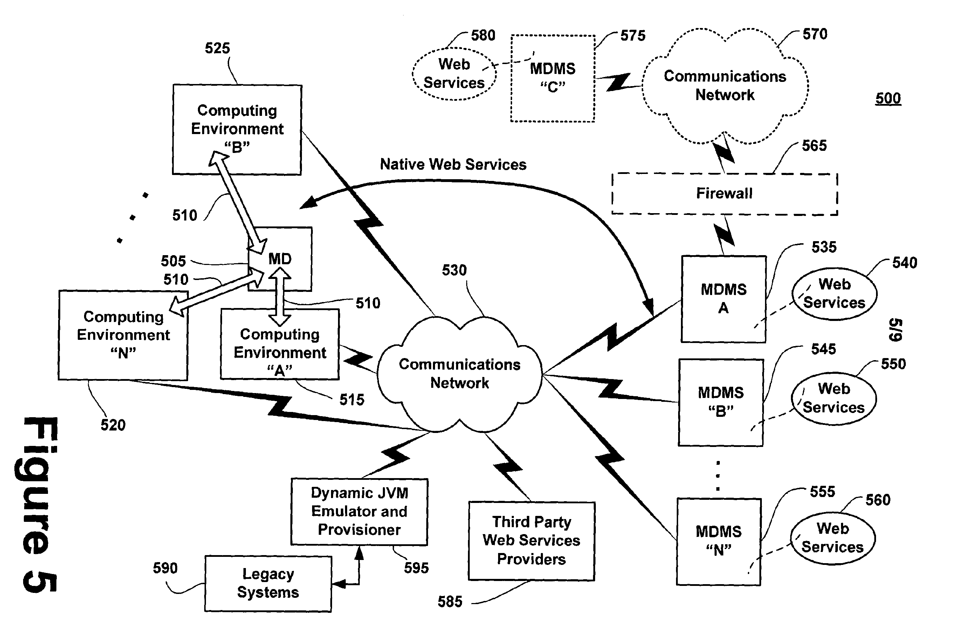

Figure 5 shows another illustrative implementation of an exemplary mobility device platform. As is shown mobility device platform 500 comprises MD 505 cooperating with a plurality of computing environments, computing environment "A" 515, computing environment "B" 525, up to computing environment "N" 520 through MD/computing environment communications interface 510. Additionally, mobility device platform 500 further comprises communications network 530 third party web services providers 585, java virtual machine (JVM) emulator and provisioner, plurality of MDMS, MDMS "A" 535 operating on web services 540, MDMS "B" operating on web services 550, up to MDMS "N" 555 operating on webs services 560. Additionally, as indicated by the dotted lines, mobility device platform 500 may further comprise, in another illustrative implementation, MDMS "C" operating on web services 580, communications network 570, and firewall 565.

In an illustrative operation, mobility device 505 cooperating with one or more of computing environments 515, 525, up to 520 may process web services for navigation and control on computing environments 515, 525, up to 520. In such context, MD 505 may request web services, 540, 550, or 560 from one ore more cooperating MDMS 535, MDMS 545, up to MDMS 555 via communications network 530. In this occurrence, any of the MDMS, 535, 545, up to 555 proceed to authenticate the requesting MD 505 to ensure that MD 505 has the right user rights, permissions, and privileges to obtain the requested web services. Upon successful authentication and verification, MDMS 535, 545, up to 555 may operate to process MD 505's request and provide the requested web services. MDMS 535, 545, up to 555, may further operate to translate the requested web service (if required - e.g. web service originates from third party web service providers 585) to an MD 505 native web service format. Additionally, MDMS 535, 545, up to 555, may operate to encrypt the requested web service using MD and user authentication and verification information to ensure that the requested web service is communicated over communications network 530 in a secure manner.

Furthermore, mobility device platform 500 may operate to obtain legacy data and/or computing applications by employing java virtual machines. In this context, MD 505 cooperates with Dynamic JVM emulator and provisioner (which although not shown may comprise a portion of one or more of MDMS 535, 545, up to 555) to request data and/or computing applications from legacy systems 590. Dynamic JVM emulator and provisioner 595 may operate to cooperate with legacy systems 590 to obtain the requested data and/or computing applications from the requesting MD 505. In this context, dynamic JVM emulator and provisioner may generate one or more java virtual machines that operate on the legacy system to present the requested data and computing applications as a web service to MD 505. Also, similar to MDMS operations, dynamic JVM emulator and provisioner may first authenticate MD 505 prior to obtaining the requested information.

Mobility device platform 500 allows for the use of multiple workspaces by mobility device 505. Stated differently, a single mobility device 505 may operate to support a number of "personalities" for participating users. For example, a participating user (not shown) may choose to use the same mobility device for corporate use and several personal uses. In this context, the mobility device may operate to provide a plurality of "work spaces" within the mobility device such that the each work space is governed by its own set of user/device authentication and verification information. Accordingly, when a participating user (not shown) wishes to retrieve information from their corporate network (e.g. assume MDMS "A" 535 is a corporate server) they may log onto MD 505 and activate the first work space (not shown) by using the participating user's corporate user authentication and identification information. The corporate MDMS (e.g. MDMS "A" 535 for purposes of this illustration) proceeds to authenticate the user based on the user's corporate user authentication and verification information, and if authenticated, may process web services request for MD 505 via communications network 530 (e.g. corporate LAN for purposes of this illustration). Since the participating user is authenticated on the corporate MDMS "A" 535 using the corporate user identification and verification information, data and/or computing applications provided to MD 505 under such circumstances is ensured to be communicated securely to the properly authenticated participating user.

Similarly, if the participating user (not shown) wishes to access their gaming web services provider (e.g. MDMS "C" 580) from a corporate computing environment, the participating user may proceed to switch his/her "personality" by activating a second work space (not shown) on MD 505. The user may invoke the gaming work space by logging off their corporate workspace and logging on the gaming work space using his/her gaming user id and password (e.g. user authentication and verification information). In this context, the participating user may access MDMS "C" 575 through a daisy chain, first getting to MDMS "A" 535 through communications interface 530 and then to gaming web services MDMS "C" 580 through the corporate firewall 565 and via external communications network 570 (e.g. Internet). As such, a participating user may use a single MD having multiple workspaces to realize their corporate and personal computing needs in a secure manner by leveraging the various user authentication and verification information.

From the foregoing it is appreciated that mobility device platform 500 is capable of operating in a manner such that a single mobility device may interact with a plurality of disparate computing environments. Examples of cooperating computing environments include but are not limited to stand alone computing environments, networked computing environments, and embedded computing environments. In the context of embedded computing environments, the herein described systems and methods may be employed to allow for interaction with embedded automotive computing environments to customize automotive driving and comfort settings (e.g. the mobility device may be configured to have a participating user's driving and comfort settings stored such that when the participating user is in the mobility the mobility device cooperates with the embedded automotive computing environment according to a selected communications interface and protocol to set the driving and comfort settings of the automobile in accordance with the stored settings). Similarly, in context with embedded electronic computing environments, a mobility device may be operate to facilitate the retrieval of multimedia from a variety of disparate locations. In such illustration, the mobility device may have stored thereon digital rights and licenses to multimedia and cooperate with one ore more consumer electronic having an embedded computing environment through a selected communications interface and communications protocol (e.g. wireless Internet Protocol) to obtain stored multimedia. Stated differently, an MP3 enabled receiver may have stored thereon or have the capability of retrieving through an external communications network (e.g. Internet) a plurality of MP3 songs. These songs may only be accessible according to specific digital rights management and/or user licenses. Accordingly, exemplary mobility device platform 500 may operate to provide a participating user access to such songs by communicating through a web services type application the rights and licenses to the cooperating MP3 enabled receiver.

It is appreciated that although mobility device platform 500 is shown to have a particular configuration and operable on various components, that such description is merely illustrative as the herein described systems and methods that comprise exemplary mobility device platform 500 may be realized through various alternate configurations and components.

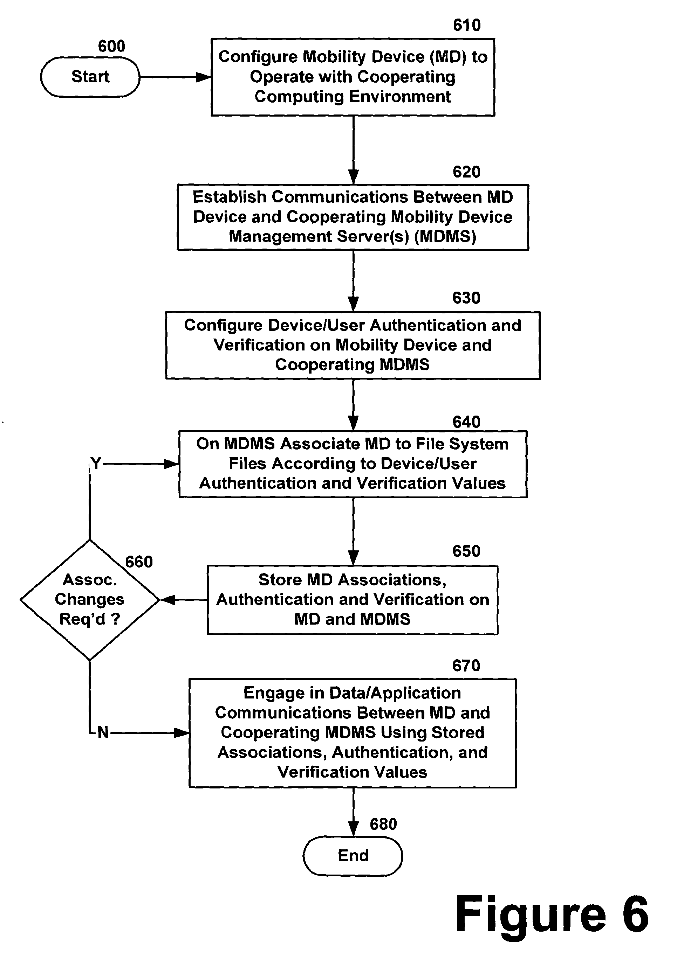

Figure 6 shoes the processing performed by exemplary mobility device platform 400 of Figure 4 when configuring the components of exemplary mobility device platform 400 for operation. As is shown in Figure 6 processing begins at block 600 and proceeds to block 610 where the mobility device is configured to operate with at least one cooperating computing environment. In this step (although not shown) exemplary mobility device platform may initiate communications with at least one computing environment through a selected communications interface operating a selected communications interface protocol. Once communications are established, exemplary mobility device platform may instruct the mobility device to launch one or more computing applications to operate on connected computing environment. Included in the computing applications may be a mobile desktop computing environment. From block 610, processing proceeds to block 620 where communications are established between the MD and cooperating MDMS over an exemplary communications network (not shown) operating on a exemplary communications network protocol (not shown). Once the communications are established between the MD and the MDMS, the MD and MDMS user/device authentication and verification values are created and stored for subsequent use at block 630. Using these authentication and verification values, the MDMS is capable of associating file system file and group settings at block 640. The file and group associations, and authentication and verification values are stored for subsequent use at block 650. A check is then performed at block 660 to determine if any association in files or groups are required for the MD on the MDMS. If the check at block 660 indicates a change in the MD file and/or group associations, processing reverts to block 640 and proceeds there from.

However, if at block 660 it is determined that there are no MD file and/or group association settings to be made, processing proceeds to block 670 where data and/or computing application communications between the MD and MDMS are performed using the generated and stored MD and user authentication and verifications values. Processing then terminates at block 680.

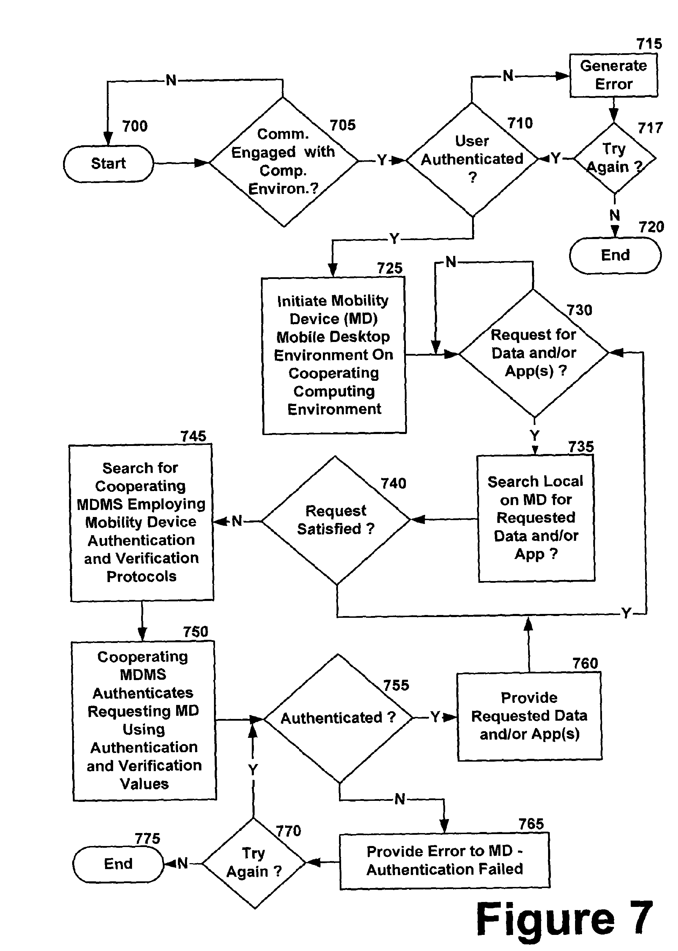

Figure 7 shows processing performed by exemplary mobility device platform 400 of Figure 4 when processing web services requests from cooperating exemplary mobility device 405 of Figure 4 according to an illustrative implementation. As is shown in Figure 7, processing begins at block 700 and proceeds to block 705 where a check is performed to ensure that exemplary mobile device 405 is in communication with at least one cooperating computing environment (415 of Figure 4). If the check at block 705 indicates that exemplary mobility device is not in communication with at least one cooperating computing environment, processing reverts to block 700 and proceeds from there.

However, if at block 705 it is determined that exemplary mobility device 405 is in communication with at least one cooperating computing environment, processing proceeds to block 710 where a check is performed to determine if the mobility device has been authenticated on a user basis (e.g. if the proper user identification and password information provided by a participating user). If the mobility device has not been successfully authenticated on a user basis, processing proceeds to block 715 where an error is generated (and possibly displayable to participating users). From there a check is performed at block 717 to determine if the user authentication of the mobility device is to be attempted again (i.e. a participating user is afforded the ability to re-input their user identification and password). If the authentication is be performed again at block 717, processing reverts back to block 710 and proceeds there from. However, if at block 717 it is determined that the user authentication is not to be attempted again, processing terminates at block 720.

If, however, at block 710 it is determined that the mobility device is authenticated on a user basis, processing proceeds to block 725 where the mobility device mobile desktop environment is initiated on the at least one cooperating computing environment. From there processing proceeds to block 730 where a check is performed to determine if there are any requests for data and/or computing applications by the MD to at least one cooperating MDMS that has authenticated the MD. If the check at block 730 indicates that there are no requests by the authenticated MD, processing reverts back to the input of block 730.

However, if at block 730, it is determined that there has been a request for data and/or computing applications by the MD, processing proceeds to block 735 where the MD is searched locally for the requested data and/or computing application. A check is then performed at block 740 to determine if the request was satisfied by the local search of the MD. If the check at block 740 indicates that the request has been satisfied by the local search of the MD, processing reverts to the input of block 730 and proceeds from there.

If, however, the check at block 740 indicates that the request has not been satisfied, processing proceeds to block 745 where cooperating MDMS are searched for using the user authentication information provided at block 710. From there, cooperating MDMS that are capable of authenticating the seeking MD proceed to authenticate the MD using the user authentication information. A check is then performed at block 755 to determine if the MD was authenticated on an MD basis using the user authentication information. If the check at block 755 indicates that the MD has been authenticated by the MDMS, processing proceeds to block 760 where the MDMS provides the requested data and/or computing applications to the requesting, now authenticated, MD. From there processing reverts to the input of block 730 and proceeds from there.

If, however, at block 755 it is determined that the cooperating MDMS did not authenticate the requesting MD, processing proceeds to block 765 where the error in authentication is provided to the requesting MD. From there processing proceeds to block 770 where a check is performed to determine whether to try authenticating the MD again by the cooperating MDMS. If the check at block 770 indicates that authentication is to be attempted again, processing reverts to the input of block 755 and proceeds from there.

However, if at block 770 it is determined that authentication is not to be attempted again by the MDMS, processing proceeds to block 775 and terminates.

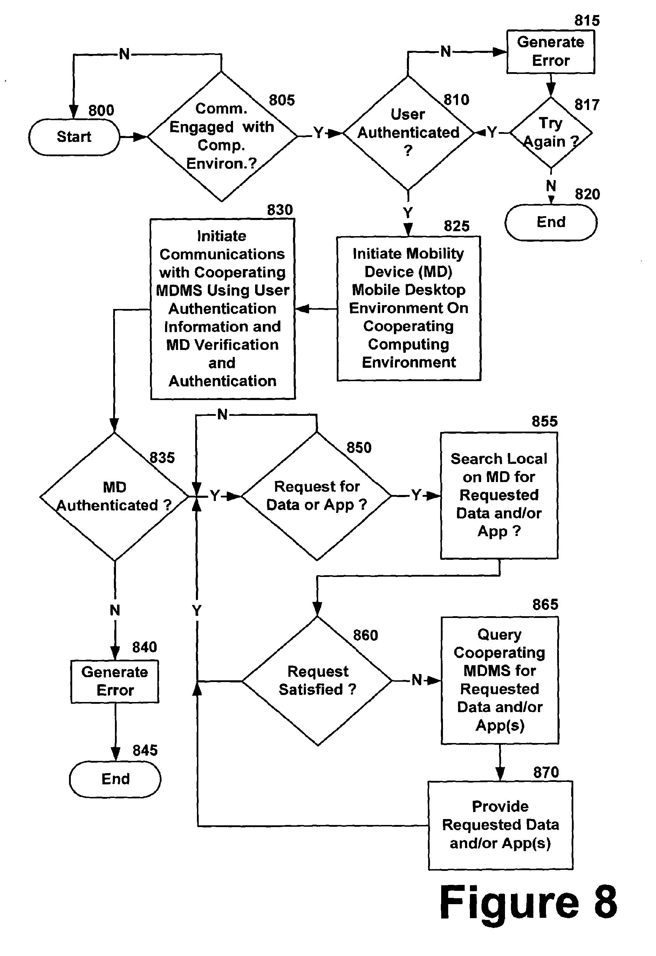

Figure 8 shows processing performed by exemplary mobility device platform 400 of Figure 4 when processing web services requests from cooperating exemplary mobility device 405 of Figure 4 according to another illustrative implementation. As is shown in Figure 8, processing begins at block 800 and proceeds to block 805 where a check is performed to ensure that exemplary mobile device 405 is in communication with at least one cooperating computing environment (415 of Figure 4). If the check at block 805 indicates that exemplary mobility device is not in communication with at least one cooperating computing environment, processing reverts to block 800 and proceeds from there.

However, if at block 805 it is determined that exemplary mobility device 405 is in communication with at least one cooperating computing environment, processing proceeds to block 810 where a check is performed to determine if the mobility device has been authenticated on a user basis (e.g. if the proper user identification and password information provided by a participating user). If the mobility device has not been successfully authenticated on a user basis, processing proceeds to block 815 where an error is generated (and possibly displayable to participating users). From there a check is performed at block 817 to determine if the user authentication of the mobility device is to be attempted again (i.e. a participating user is afforded the ability to re-input their user identification and password). If the authentication is be performed again at block 817, processing reverts back to block 810 and proceeds there from. However, if at block 817 it is determined that the user authentication is not to be attempted again, processing terminates at block 820.

If, however, at block 810 it is determined that the mobility device is authenticated on a user basis, processing proceeds to block 825 where the mobility device mobile desktop environment is initiated on the at least one cooperating computing environment. From there, communications are initiated with at least one cooperating MDMS using the user authentication information and MD specific authentication and verification information (e.g. public/private keys). A check is then performed at block 835 to determine if at least one cooperating MDMS has properly authenticated the MD. If at block 835 it is determined that the MD has not been authenticated by at least one cooperating MDMS, processing proceeds to block 840 where an error is generated (and possibly displayable to participating users through the mobile desktop environment). From there processing terminates at block 845.

However, if at block 835 it is determined that at least one cooperating MDMS has authenticated the mobility device, processing proceeds to block 850 where a check is performed to determine if there are any requests for data and/or computing applications by the MD to at least one cooperating MDMS that has authenticated the MD. If the check at block 850 indicates that there are no requests by the authenticated MD, processing reverts back to the input of block 850.

However, if at block 950, it is determined that there has been a request for data and/or computing applications by an authenticated MD to at least one cooperating MDMS that has authenticated the MD, processing proceeds to block 855 where the MD is searched locally for the requested data and/or computing application. A check is then performed at block 860 to determine if the request was satisfied by the local search of the MD. If the check at block 860 indicates that the request has been satisfied by the local search of the MD, processing reverts to the input of block 850 and proceeds from there.

If, however, the check at block 860 indicates that the request has not been satisfied, processing proceeds to block 865 where the cooperating MDMS are queried for the requested data and/or computing applications. The requested data and/or computing applications are then provided to the requesting authenticated MD at block 870. From there processing reverts to the input of block 850 and proceeds there from.

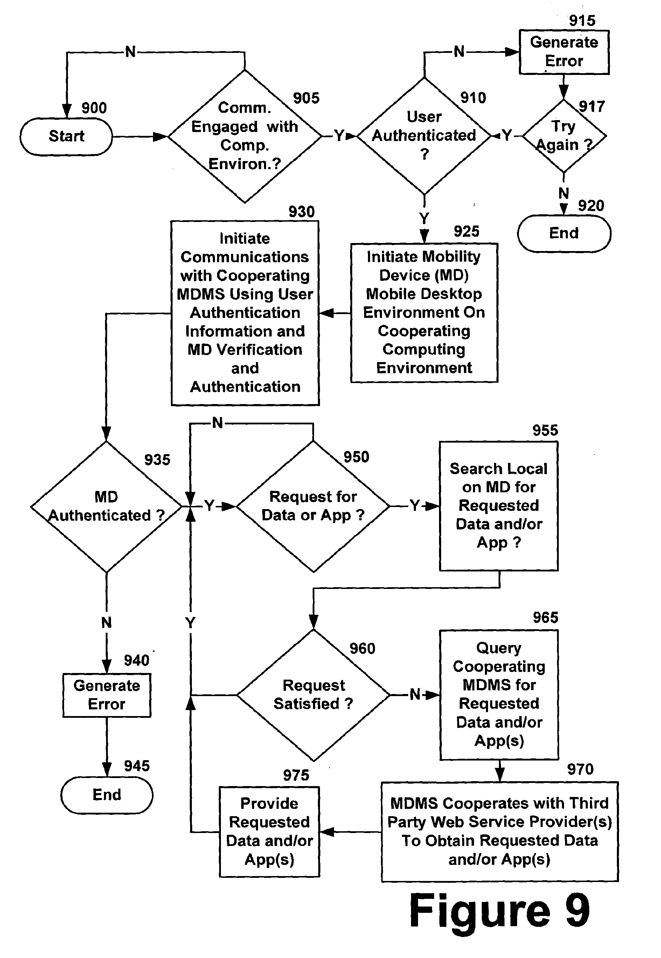

Figure 9 shows the processing performed by exemplary mobility device platform 400 of Figure 4 when cooperating with third party web service providers to process web services requests from cooperating exemplary mobility device 405 of Figure 4. As is shown in Figure 9, processing begins at block 900 and proceeds to block 905 where a check is performed to ensure that exemplary mobile device 405 is in communication with at least one cooperating computing environment (415 of Figure 4). If the check at block 905 indicates that exemplary mobility device is not in communication with at least one cooperating computing environment, processing reverts to block 900 and proceeds from there.

However, if at block 905 it is determined that exemplary mobility device 405 is in communication with at least one cooperating computing environment, processing proceeds to block 910 where a check is performed to determine if the mobility device has been authenticated on a user basis (e.g. if the proper user identification and password information provided by a participating user). If the mobility device has not been successfully authenticated on a user basis, processing proceeds to block 915 where an error is generated (and possibly displayable to participating users). From there a check is performed at block 917 to determine if the user authentication of the mobility device is to be attempted again (i.e. a participating user is afforded the ability to re-input their user identification and password). If the authentication is be performed again at block 917, processing reverts back to block 910 and proceeds there from. However, if at block 917 it is determined that the user authentication is not to be attempted again, processing terminates at block 920.

If, however, at block 910 it is determined that the mobility device is authenticated on a user basis, processing proceeds to block 925 where the mobility device mobile desktop environment is initiated on the at least one cooperating computing environment. From there, communications are initiated with at least one cooperating MDMS using the user authentication information and MD specific authentication and verification information (e.g. public/private keys). A check is then performed at block 935 to determine if at least one cooperating MDMS has properly authenticated the MD. If at block 935 it is determined that the MD has not been authenticated by at least one cooperating MDMS, processing proceeds to block 940 where an error is generated (and possibly displayable to participating users through the mobile desktop environment). From there processing terminates at block 945.

However, if at block 935 it is determined that at least one cooperating MDMS has authenticated the mobility device, processing proceeds to block 950 where a check is performed to determine if there are any requests for data and/or computing applications by the MD to at least one cooperating MDMS that has authenticated the MD. If the check at block 950 indicates that there are no requests by the authenticated MD, processing reverts back to the input of block 950.

However, if at block 950, it is determined that there has been a request for data and/or computing applications by an authenticated MD to at least one cooperating MDMS that has authenticated the MD, processing proceeds to block 955 where the MD is searched locally for the requested data and/or computing application. A check is then performed at block 960 to determine if the request was satisfied by the local search of the MD. If the check at block 960 indicates that the request has been satisfied by the local search of the MD, processing reverts to the input of block 950 and proceeds from there.

If, however, the check at block 960 indicates that the request has not been satisfied, processing proceeds to block 965 where the cooperating MDMS are queried for the requested data and/or computing applications. From there, processing proceeds to block 970 where the cooperating MDMS cooperate with third party web service providers(s) to obtain the requested data and/or computing applications. The requested data and/or computing applications are then provided to the requesting authenticated MD at block 975. From there processing reverts to the input of block 950 and proceeds there from.

In sum, the herein described systems and methods provide a mobility device platform. It is understood, however, that the invention is susceptible to various modifications and alternative constructions. There is no intention to limit the invention to the specific constructions described herein. On the contrary, the invention is intended to cover all modifications, alternative constructions, and equivalents falling within the scope and spirit of the invention.

It should also be noted that the present invention may be implemented in a variety of computer environments (including both non-wireless and wireless computer environments), partial computing environments, and real world environments. The various techniques described herein may be implemented in hardware or software, or a combination of both. Preferably, the techniques are implemented in computing environments maintaining programmable computers that include a processor, a storage medium readable by the processor (including volatile and nonvolatile memory and/or storage elements), at least one input device, and at least one output device. Computing hardware logic cooperating with various instructions sets are applied to data to perform the functions described above and to generate output information. The output information is applied to one or more output devices. Programs used by the exemplary computing hardware may be preferably implemented in various programming languages, including high level procedural or object oriented programming language to communicate with a computer system. Illustratively the herein described apparatus and methods may be implemented in assembly or machine language, if desired. In any case, the language may be a compiled or interpreted language. Each such computer program is preferably stored on a storage medium or device (e.g., ROM or magnetic disk) that is readable by a general or special purpose programmable computer for configuring and operating the computer when the storage medium or device is read by the computer to perform the procedures described above. The apparatus may also be considered to be implemented as a computer-readable storage medium, configured with a computer program, where the storage medium so configured causes a computer to operate in a specific and predefined manner.

Although an exemplary implementation of the invention has been described in detail above, those skilled in the art will readily appreciate that many additional modifications are possible in the exemplary embodiments without materially departing from the novel teachings and advantages of the invention. Accordingly, these and all such modifications are intended to be included within the scope of this invention. The invention may be better defined by the following exemplary claims.

## Claims

1. A mobility device platform comprising:
a mobility device having independent computing capabilities operable to interface with a computing environment; and
a mobility device server cooperating with the mobility device to provide data to the mobility device.

2. The platform as recited in claim 1 further comprising a communications network operative to communicate data between the mobility device and the mobility device server.

3. The platform as recited in claim 1 further comprising an encryption protocol for use by the mobility device and the mobility device server when communicating data between each other.

4. The platform as recited in claim 3 wherein the encryption protocol is applied to data storage architecture used by the mobility device and the mobility device server.

5. The platform as recited in claim 4 wherein the data storage architecture comprises any of a file allocation table (FAT) file system and a new technology file system (NTFS).

6. The platform as recited in claim 3 further comprising an authentication and verification module that allows the mobility device and mobility device server to authenticate and verify each other to allow the communication of data.

7. The platform as recited in claim 6 wherein the authentication and verification module operates on data comprising any of: user identification information, user password information, public key information and private key information.

8. The platform as recited in claim 1 further comprising a communications interface operative to connect the mobility device with the computing environment.

9. The platform as recited in claim 8 wherein the communications interface is embedded in the mobility device.

10. The platform as recited in claim 8 wherein the communications interface comprises any of universal serial bus (USB), IEEE 1394 communications interface (Firewire), 802.XX communications interface, blutetooth communications interface, personal computer interface, small computer serial interface, and wireless application protocol (WAP) communications interface.

11. The platform as recited in claim 10 wherein the computing environment comprises any of a stand alone computing environment, a networked computer environment, and an embedded computing environment.

12. The platform as recited in claim 11 wherein the computing environment is an automotive embedded computing environment.

13. The platform as recited in claim 11 wherein the computing environment is a consumer electronic embedded computing environment.

14. The platform as recited in claim 11 wherein the computing environment is a building automated control embedded computing environment.

15. The platform as recited in claim 1 wherein the data comprises any of data for use with one or more computing applications and control information.

16. The platform as recited in claim 1 wherein the communications network comprises any of: a fixed wire local area network (LAN), a wireless local area network (LAN), a fixed wire wide area network (WAN), a wireless wide area network (WAN), a fixed wire peer-to-peer communications network, a wireless peer-to-peer communications network, a code division multiple access (CDMA) communications network, a time division multiple access (TDMA) communications network, a global system for mobile communications (GSM) communications network, the wireless Internet, and the Internet.

17. The platform as recited in claim 1 wherein in the mobility device maintains a plurality of workspaces operative to allow the mobility device to cooperate with disparate mobility device servers.

18. The platform as recited in claim 17 wherein the mobility device operates cooperates with the disparate mobility device servers using an encryption protocol.

19. The platform as recited in claim 18 wherein the mobility device employs an independent encrypted communication tunnel for each of the plurality of workspaces.

20. The platform as recited in claim 19 wherein the mobility device supports unique authentication and verification for each of the plurality of workspaces.

21. The platform as recited in claim 1 wherein the mobility device cooperates with the computing environment to display a user interface operative to receive and process commands from participating users to the computing environment to control, manipulate, and manage data and applications.

22. The platform as recited in claim 21 wherein mobility device management server cooperates with other mobility management device management servers to provide web services to the mobility device.

23. The platform as recited in claim 22 wherein the mobility device management server cooperates with third party web services providers to provide web services to the mobility device.

24. The platform as recited in claim 1 wherein the mobility device comprises any of a processing unit, a mobility device communications interface unit, ROM storage, RAM storage, and an operating system.

25. A method to allow secure communications of data in a computing environment comprising:
providing a mobility device having independent computing capabilities operable to interface with a computing environment; and
providing a mobility device server cooperating with the mobility device to provide data to the mobility device.

26. The method as recited in claim 25 further comprising establishing a communications link between the mobility device and the computing environment.

27. The method as recited in claim 26 further comprising establishing a communications link between the mobility device and the mobility device management server.

28. The method as recited in claim 27 further comprising authenticating the mobility device at the mobility device management server to determine the rights and privileges of the mobility device.

29. The method as recited in claim 28 further comprising receiving a request for a web service from the mobility device to the mobility device management server.

30. The method as recited in claim 29 further comprising receiving a request for a web service from the mobility device to the mobility device management server using server object access protocol (SOAP).

31. The method as recited in claim 29 further comprising retrieving the requested web service at the mobility device management server using mobility device authentication information.

32. The method as recited claim 31 further comprising translating the retrieved web service into a mobility device native web service format.

33. The method as recited in claim 31 further comprising encrypting the retrieved web service using mobility device authentication information.

34. The method as recited in claim 33 further comprising communicating the retrieved encrypted web service to the mobility device from the mobility device management server.

35. The method as recited in claim 34 further comprising processing the communicated encrypted web service at the mobility device for display and control on the cooperating computing environment.

36. A computer readable medium having computer readable instructions to instruct a computer to perform the method as recited in claim 35.

37. A system to securely communicate web services across a computing environment comprising:
a first means for interfacing with a cooperating computing environment, the first means having independent computing capabilities; and
a second means for providing web services securely to the first means.

38. The system as recited in claim 37 further comprising a third means for operatively linking the first and second means together.

39. The system as recited in claim 38 further comprising a fourth means for authenticating and verifying the rights and privileges of the first means to access web services from the second means,
wherein the fourth means comprises any of a biometric security mechanism, retinal scan security mechanism, and a voice recognition security mechanism.

40. The system as recited in claim 39 further comprising a fifth means for encrypting the web service cooperating with the fourth means for authentication.

41. The system as recited in claim 40 wherein web services comprise any of user management web services, computing applications, and data.

42. A method to remotely obtain secure web services comprising:
configuring a mobility device with a cooperating computing environment such that the mobility device is operable to execute one or more computing applications capable of operating web services on the cooperating computing environment;
establishing communications with at least one cooperating mobility device management server;
authenticating at the mobility device management server the mobility device to determine the rights, access, and privileges of the mobility device to access web services on the mobility device management server;
receiving requests for web services from the mobility device at the mobility device management server;
processing the requests for web services using the mobility device authentication information;
retrieving web services to satisfy web service requests by the mobility device;
encrypting the web services according to a selected encryption protocol; and
communicating the requesting mobility services to the mobility device for execution on the cooperating computing environment.

43. The method as recited in claim 42 further comprising authenticating the mobility device on the cooperating computing environment using user identification and user password information.

44. The method as recited in claim 42 further comprising performing an auto-run of at least one application or routine found on the mobility device when configuring the mobility device with the cooperating computing environment.

45. The method as recited inc claim 42 further comprising cooperating with third party web services providers to retrieve requested web services.

46. The method as recited in claim 42 further comprising cooperating with a java virtual machine to obtain legacy applications and data.

47. A computer readable medium having computer readable instructions to instruct a computer to perform the method as recited in claim 42.
